# EUROPEAN PATENT APPLICATION

(11) **EP 1 114 742 A2**
(43) Date of publication of application: **11.07.2001**
(21) Application number: 00128529.5
(22) Date of filing: 27.12.2000
(51) Int. Cl.: B60H 1/00, B60H 1/32, F25B 45/00

(54) **Coolant regeneration and refill unit for a vehicle air conditioner**

(30) Priority: 07.01.2000 IT TO200014
(71) Applicant: KRIOS A.C. S.r.l., 10143 Torino (IT)
(72) Inventor: Cortese, Renzo, 20141 Milano (IT); Ciccarone, Donato, 10055 Condove (IT); Ferrero, Vanni, 12084 Sommariva Bosco (IT); Bernardi, Umberto, 20139 Milano (IT)
(74) Representative: Eccetto, Mauro

(57) **Abstract**

A coolant regeneration and refill unit for an air conditioner of a vehicle, wherein the conditioner has a first coolant circuit (9), and the unit has a second circuit (17) connectable to a high-pressure branch (10) and a low-pressure branch (11) of the first circuit (9) by a first and a second connecting pipe (14, 15) respectively; control means (18) and actuating means (24, 25, 32, 33, 34) for automatically altering the configuration of the second circuit (17) and for selectively cutting off coolant flow along the first and second connecting pipe (14, 15), so as to control, from a remote position with respect to the vehicle (3), a cycle of operations which provide for draining the first circuit (9), forming a vacuum in the first circuit (9), feeding oil into the low-pressure branch (11), refilling the high-pressure branch (10) with coolant and refilling the low-pressure branch (11) with coolant.

## Description

The present invention relates to a coolant regeneration and refill unit for a vehicle air conditioner.

Known coolant regeneration and refill units comprise a regeneration and refill circuit, and a first and second pipe for connecting the regeneration and refill circuit to a low-pressure branch and high-pressure branch respectively of a conditioner circuit. Known units perform a cycle of operations, which consist in emptying or draining the conditioner circuit; forming a given vacuum in the conditioner circuit; feeding oil into the low-pressure branch using the vacuum generated in the conditioner circuit; and refilling the high-pressure branch with coolant also using the vacuum generated in the conditioner circuit.

To perform the above operations, regeneration and refill units of the above type must be set up accordingly by an operator changing the connections of the first and second pipes to the conditioner circuit and altering the configuration of the regeneration and refill circuit. A major drawback of such units lies in the operator possibly forgetting to change the connections of the first and second pipes and/or to alter the configuration of the regeneration and refill circuit, thus resulting in serious damage to the vehicle conditioner.

Moreover, using known units, in the event coolant refill (which applies solely to the high-pressure branch) is incomplete, i.e. the full amount of coolant required to ensure correct operation of the conditioner is prevented from getting through, the only possible solution is to repeat the entire cycle - drainoff, vacuum formation, oil feed, coolant refill - from start to finish. The drawback of failing to effect a complete refill is encountered when the difference in pressure between the regeneration and refill circuit and the conditioner circuit is insufficient to transfer the amount of coolant required to operate the conditioner.

It is an object of the present invention to provide a regeneration and refill unit for a vehicle air conditioner, designed to eliminate the aforementioned drawbacks.

According to the present invention, there is provided a coolant regeneration and refill unit for an air conditioner of a vehicle, wherein the conditioner has a first coolant circuit comprising a high-pressure branch and a low-pressure branch; the unit comprising a second circuit connectable to said high-pressure branch and said low-pressure branch by a first and a second connecting pipe respectively; and said unit being characterized by comprising control means and actuating means for automatically altering the configuration of said second circuit and for selectively cutting off flow along said first and second pipe, so as to control, from a remote position with respect to said vehicle, a cycle of operations comprising draining the first circuit, forming a vacuum in the first circuit, feeding oil into the low-pressure branch, refilling the high-pressure branch with coolant and refilling the low-pressure branch with coolant.

The unit according to the present invention has the advantages of preventing operator errors in altering the configuration of the regeneration unit circuit and the connecting pipe connections, and of being designed to refill the low-pressure branch of the conditioner with coolant.

A non-limiting embodiment of the present invention will be described by way of example with reference to the accompanying drawings, in which:
Figure 1 shows a side view, with parts removed for clarity, of a regeneration and refill unit in accordance with the present invention and connected to a vehicle air conditioner;
Figure 2 shows a schematic of the Figure 1 regeneration and refill unit.

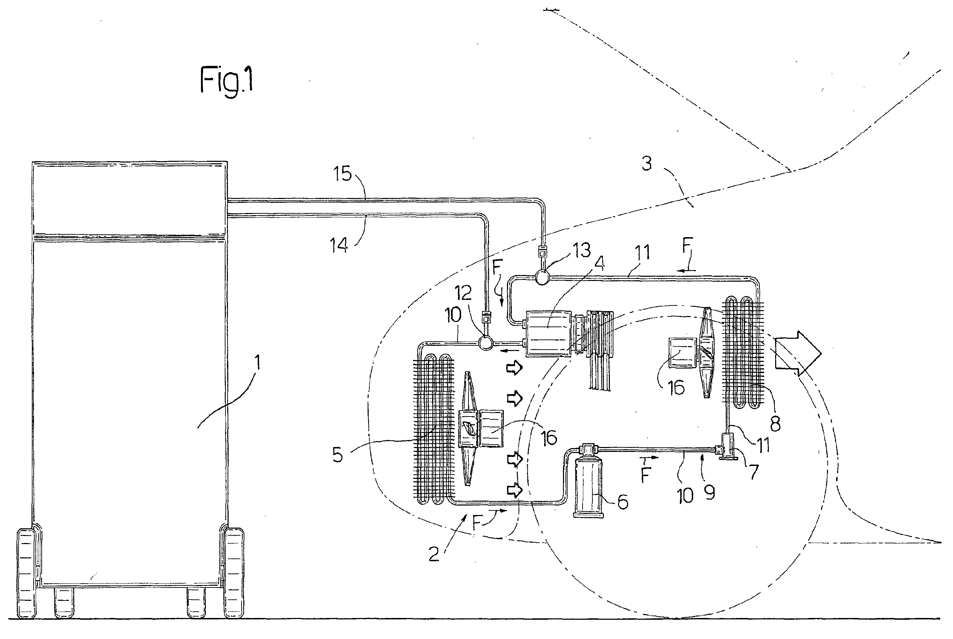

Number 1 in Figure 1 indicates as a whole a regeneration and refill unit for an air conditioner 2 of a vehicle 3 shown by the dash-and-dot line. Unit 1 is connected to conditioner 2 to perform a cycle of operations comprising transferring coolant from conditioner 2 to unit 1; regenerating the coolant in unit 1; forming a vacuum in conditioner 2; feeding oil into conditioner 2; and refilling conditioner 2 with the regenerated coolant, plus additional coolant, if necessary, to compensate for any losses.

Conditioner 2 of vehicle 3 operates with known coolant, e.g. Freon, and comprises a compressor 4, a condenser 5, a filter 6, an expansion valve 7 and an evaporator 8, which are located in succession along a closed circuit 9. Circuit 9 comprises a high-pressure branch 10 extending between compressor 4 and expansion valve 7 in the coolant flow direction indicated by arrows F in Figure 1; and a low-pressure branch 11 extending, also in the direction indicated by arrows F, between expansion valve 7 and compressor 4. Conditioner 2 also comprises a valve 12 with a coupling located along branch 10 between compressor 4 and condenser 5; a valve 13 with a coupling located along branch 11 between evaporator 8 and compressor 4; and two fans 16 opposite condenser 5 and evaporator 8 respectively.

Refill unit 1 is trolley-mounted and has two connecting pipes 14 and 15, which, in use, are connected to the couplings of valves 12 and 13 respectively as shown in Figure 1.

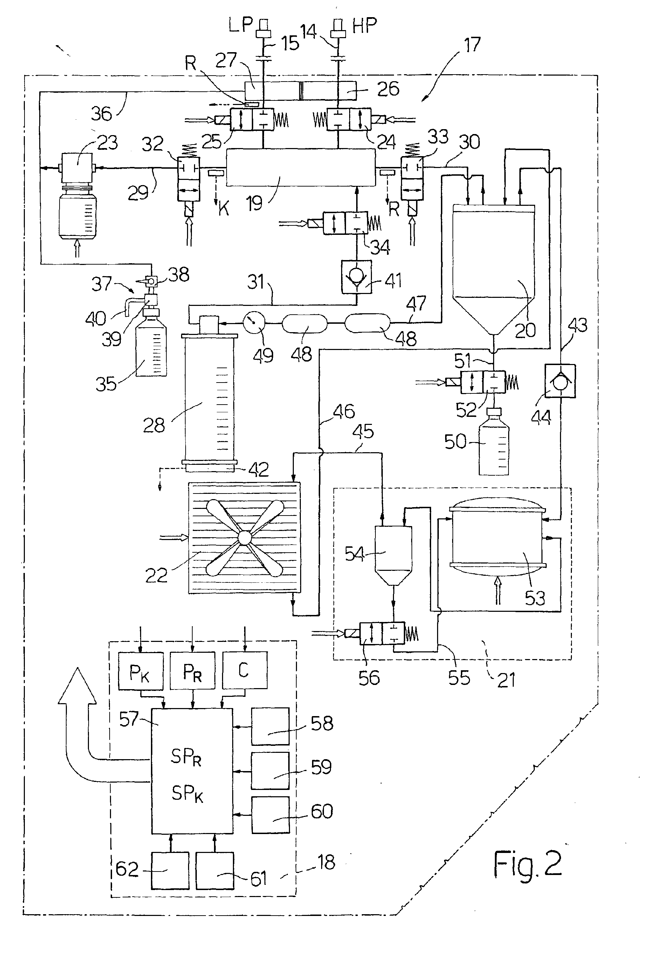

With reference to Figure 2, unit 1 comprises a refill circuit 17 and a control unit 18 for controlling operation of unit 1. Circuit 17 comprises a manifold 19; a still 20 for oil-coolant separation; a compressor 21; a condenser 22; and a vacuum pump 23. Manifold 19 is connected to pipes 14 and 15, along which are located respective on-off solenoid valves 24 and 25 and respective chambers 26 and 27. Manifold 19 is also connected to vacuum pump 23, still 20 and a coolant refill tank 28 by respective pipes 29, 30 and 31, along which are located respective solenoid valves 32, 33 and 34, and an oil refill tank 35 is connected to chamber 27 by a pipe 36. Tank 35 comprises a safety device 37 in turn comprising a tap 38, a fitting 39 and a relief pipe 40, which is connected to fitting 39 and has a one-way valve (not shown) on the free end.

In addition to solenoid valve 34, pipe 31 is also fitted with a nonreturn valve 41. Tanks 28 and 35 are transparent and graduated to keep a visual check on the amount of coolant and oil respectively throughout operation of unit 1. Tank 28 is located on a load cell 42 for emitting a signal C, the value of which is related to the mass of coolant in tank 28.

Still 20 is connected to compressor 21 by a pipe 43, along which is located a nonreturn valve 44. Condenser 22 is connected to compressor 21 by a pipe 45 and to still 20 by a pipe 46. Still 20 is in turn connected to tank 28 by a pipe 47, along which are located in succession two filters 48 and a gauge 49.

The oil removed in still 20 is fed into a vessel 50 connected to still 20 by a pipe 51, along which is located a solenoid valve 52. Compressor 21 comprises a pumping assembly 53 and a separator 54, which is connected to pumping assembly 53 by a lubricating oil recirculator 55, along which is located a solenoid valve 56.

Control unit 18 comprises a microprocessor 57, which receives a pressure-related signal P_{R} from a pressure detector R located along pipe 30 between manifold 19 and solenoid valve 33; a pressure-related signal P_{K} from a pressure detector K located along pipe 29 between manifold 19 and solenoid valve 32; and signal C from load cell 42. Pressure detector R operates at over-1-bar pressures, i.e. greater than atmospheric, while pressure detector K operates at below-atmospheric pressures. Microprocessor 57 is controlled by means of an on-off switch 58; a push-button 59 for refilling conditioner 2 along high-pressure branch 10; a push-button 60 for refilling conditioner 2 along low-pressure branch 11; a push-button 61 for draining conditioner 2; and a push-button 62 for forming a vacuum in circuit 9 of conditioner 2. Microprocessor 57 controls opening and closing of solenoid valves 24, 25, 32, 33, 34, 52, 56 and activation of vacuum pump 23, compressor 21 and condenser 22 as a function of the values of signals P_{R}, P_{K} and C and the control settings of push-buttons 59-62. In other words, microprocessor 57 alters the connections between unit 1 and conditioner 2 and the configuration of circuit 17 from a remote position with respect to vehicle 3, so that the operator can only perform said cycle of operations by following and controlling the operations via control unit 18.

With reference to Figure 1, in actual use, unit 1 is connected to conditioner 2 of vehicle 3 by connecting pipes 14 and 15 to valves 12 and 13 respectively.

Pipes 14 and 15 are connected with vehicle 3 and conditioner 2 off; and valves 12 and 13 are then opened to connect branches 10 and 11 to connecting pipes 14 and 15.

Unit 1 is set up with tank 35 containing a given quantity of oil, tank 28 containing a given quantity of coolant, and with an empty vessel 50 for catching the old oil.

Once unit 1 and conditioner 2 are connected, unit 1 is activated by turning on switch 58. In this condition, pump 23, compressor 21 and the condenser are off and solenoid valves 24, 25, 32, 33, 34, 52 and 56 are closed.

The first operation performed by unit 1 is to drain the coolant from circuit 9 of conditioner 2 into circuit 17. This is done by pressing push-button 61, which, via microprocessor 57, opens solenoid valves 24, 25, 33 and activates compressor 21 and condenser 22. As it is drained off, the coolant flows along pipes 14 and 15, expands inside chambers 26, 27 and manifold 19, flows through still 20 where it is separated from the oil, and is compressed by compressor 21 and condensed by condenser 22. The liquid coolant flows through still 20 again, is filtered by filters 48, and is collected in tank 28. In other words, the coolant is simultaneously drained off and regenerated. When signal P_{R} assumes a given threshold value SP_{R}, normally ranging between 1.2 and 1.5 bar, microprocessor 57 stops compressor 21 and condenser 22 and closes solenoid valves 24, 25, 33 to terminate drainoff and recover the coolant. The operator then presses push-button 62, which, via microprocessor 57, opens solenoid valves 24, 25, 32 and activates pump 23 to begin forming a vacuum in circuit 9 of conditioner 2. At this stage, detector K transmits signal P_{K}, indicating the vacuum formed in conditioner 2, to microprocessor 57, which compares the values of P_{K} with a threshold value SP_{K}. When a given vacuum, i.e. a given P_{K} value, is reached, the operation is terminated and microprocessor 57 closes solenoid valves 24, 25, 32 and turns off pump 23.

Once the desired vacuum is reached and the vacuum-forming operation is terminated, tap 38 is opened to feed in the oil from tank 35, which is sucked into low-pressure branch 11 of circuit 9 through chamber 27 and along pipe 15. The refilling of circuit 9 is then commenced by pressing push-button 59. Microprocessor 57 opens solenoid valves 24 and 34 so that the coolant in tank 28 is also sucked into high-pressure branch 10 of conditioner 2; and coolant flow between tank 28 and circuit 9 is cut off when the pressure in circuit 9 equals the pressure in tank 28. The graduated scale on tank 28 gives a visual indication of the amount of coolant transferred to circuit 9, while load cell 42 supplies signal C related to the same amount of transferred coolant, which is shown on a display (not shown) of control unit 18. The amount of coolant transferred depends on the difference in pressure between circuit 9 and tank 28 prior to commencing the refill operations. In other words, the greater the pressure difference, the greater the quantity of coolant transferred.

The operator knows how much coolant is required for the conditioner 2 of a given vehicle 3 model to operate correctly, and so compares the coolant transfer data with the amount required for correct operation of conditioner 2 of vehicle 3.

If the difference in pressure between tank 28 and circuit 9 is insufficient to transfer the full amount of coolant required, the coolant is fed along low-pressure branch 11 of circuit 9 of conditioner 2. This involves successively turning on vehicle 3, activating conditioner 2, and pressing push-button 60 to set unit 1 to an operating mode wherein only solenoid valves 25 and 34 are open. Coolant is transferred to low-pressure branch 11 by opening and closing solenoid valves 25 and 34 at intervals, since transferring the liquid coolant continuously along branch 11 would impair operation of compressor 4 of conditioner 2. Microprocessor 57 is so programmed as to open and close solenoid valves 25 and 34 cyclically when push-button 60 is pressed. In one variation, solenoid valves 25 and 34 are normally closed and are only opened when push-button 60 is kept pressed, so that the operator transfers the coolant at intervals to low-pressure branch 11 until the required amount of coolant has been transferred.

As the coolant is being fed into low-pressure branch 11, and in the event tap 38 is not closed, the safety valve (not shown) prevents the shock wave caused by rapid expansion of the liquid coolant from damaging tank 35.

## Claims

1. A coolant regeneration and refill unit for an air conditioner of a vehicle, wherein the conditioner (2) has a first coolant circuit (9) comprising a high-pressure branch (10) and a low-pressure branch (11); the unit (1) comprising a second circuit (17) connectable to said high-pressure branch and said low-pressure branch (10, 11) by a first and a second connecting pipe (14, 15) respectively; and said unit (1) being characterized by comprising control means (18) and actuating means (24, 25, 32, 33, 34) for automatically altering the configuration of said second circuit (17) and for selectively cutting off flow along said first and second pipe (14, 15), so as to control, from a remote position with respect to said vehicle (3), a cycle of operations comprising draining the first circuit (9), forming a vacuum in the first circuit (9), feeding oil into the low-pressure branch (11), refilling the high-pressure branch (10) with coolant and refilling the low-pressure branch (11) with coolant.

2. A unit as claimed in Claim 1, characterized in that said actuating means (24, 25, 32, 33, 34) comprise a first and a second solenoid valve (24, 25) located along said first and second connecting pipe (14, 15) respectively.

3. A unit as claimed in Claim 2, characterized in that said second circuit (17) comprises a manifold (19) connected to said first and second pipe (14, 15), to a vacuum pump (23), to a refill tank (28), and to regenerating means (20, 21, 22) for regenerating said coolant, so as to receive the regenerated coolant from said manifold (19) and transfer said regenerated coolant to said tank (28).

4. A unit as claimed in Claim 3, characterized in that said actuating means (24, 25, 32, 33, 34) comprise a third solenoid valve (32) located between said manifold (19) and said vacuum pump (23); a fourth solenoid valve (33) located between said manifold (19) and said regenerating means (20, 21, 22) for regenerating the coolant; and a fifth solenoid valve (24) located between said manifold (19) and said tank (28).

5. A unit as claimed in Claim 3, characterized by comprising a pipe (36) for feeding oil to a chamber (27) located along said second connecting pipe (15); said second solenoid valve (25) being located between said manifold (19) and said chamber (27).

6. A unit as claimed in Claim 3, characterized in that said tank (28) is located on a load cell (42) for emitting a signal (C) related to the quantity of coolant in said tank (28).

7. A unit as claimed in Claim 1, characterized by comprising pressure detecting means (R, K) for detecting the pressure in said first circuit (9) and emitting signals (P_{R}, P_{K}) related to the pressure in said first circuit.

8. A unit as claimed in Claim 7, characterized in that said means comprise a first and a second pressure detector (R, K) for respectively emitting a first and a second signal (P_{R}, P_{K}) related to the pressure in said first circuit (9).

9. A unit as claimed in Claim 8, characterized in that said control means (18) compare the values of said first signal (P_{R}) with a first threshold value (SP_{R}) to terminate draining of said first circuit (9).

10. A unit as claimed in Claim 8, characterized in that said control means (18) compare the values of said second signal (P_{K}) with a second threshold value (SP_{K}) to terminate formation of the vacuum in said first circuit (9).
